# EUROPEAN PATENT SPECIFICATION

(11) **EP 3 254 789 B1**
(45) Date of publication and mention of the grant of the patent: **29.04.2026**
(21) Application number: 17176790.8
(22) Date of filing: 27.03.2014
(51) Int. Cl.: B23B 45/00, B23B 45/02, B25H 1/00, H01M 10/48, H01M 50/247, H01M 50/227, H01M 50/271, H01M 50/284, H02J 7/00

(54) **BATTERY-OPERATED DRILLING MACHINE**
BATTERIEBETRIEBENE BOHRMASCHINE
MACHINE DE PERÇAGE ALIMENTÉE PAR BATTERIE

(30) Priority: 29.03.2013 JP 2013073102; 18.09.2013 JP 2013193285
(43) Date of publication of application: 13.12.2017
(62) Divisional of application: 14775679.5
(73) Proprietor: Nitto Kohki Co., Ltd., Tokyo 146-8555 (JP)
(72) Inventor: OHTSUKA, Kenji, Tokyo, 146-8555 (JP); YOKOYAMA, Toshiki, Tokyo, 146-8555 (JP)
(74) Representative: Schmidbauer, Andreas Konrad

(56) References cited:
- US-A- 2 977 825
- US-A1- 2009 028 653
- US-A1- 2010 320 969

## Description

### Technical Field;

The present invention relates to a portable drilling machine driven by a battery.

### Background Art:

A portable drilling machine generally has a body unit, a drilling drive unit that has a motor rotationally driving a drilling tool, e.g. a drill, and that is vertically movably attached to the body unit, and a securing unit provided underneath the body unit to securely hold the drilling machine to a workpiece. There is one type of the securing unit that utilizes the magnetic force of a permanent magnet to magnetically hold the drilling machine to a workpiece made of a magnetic material. In this regard, there has also been developed a drilling machine having a securing unit utilizing an electromagnet to hold the drilling machine to a workpiece in view of operability, ease of positioning, and so forth. The drilling machine having a securing unit utilizing an electromagnet uses a commercial power supply as a power source therefor as shown in JP 4 787 768 B2. The use of a commercial power supply as a power source undesirably limits places where the drilling machine can be used to where a commercial power supply is available.

Attention is also drawn to US 2009 028 653 A, which shows a drill press as per the preamble of claim 1, which includes inter alia a housing and a motor assembly, with a motor carriage attached to the housing. The motor assembly includes an electric motor and a drill bit, and the motor carriage is operable for moving the motor assembly relative to the housing. A base, coupled to a portion of the housing, is operable for magnetically coupling the tool to a workpiece.

### Summary of Invention:

### Technical Problem:

Accordingly, an object of the present invention is to provide a drilling machine using a battery to drive an electromagnet for securely holding a drilling machine body unit and also to drive a motor rotationally driving a drilling tool, thereby solving the above-described problems with the background art. Another object of the present invention is to suppress the power consumption of the battery in the drilling machine of the present invention, thereby allowing the drilling machine to be used for an extended period of time, and also to sufficiently ensure the safety of the drilling machine while suppressing the power consumption of the battery.

### Solution to Problem:

The present invention provides a drilling machine as set forth in claim 1. A preferable embodiment is given in dependent claim 2.

The drilling machine inter alia has a body unit, an electromagnet attached to the body unit to securely hold the body unit in a position for a drilling operation by the drilling machine, a drilling drive unit that has a motor for rotationally driving a drilling tool and that is attached to the body unit so as to reciprocate relative to the body unit to move the drilling tool toward and away from a workpiece to be drilled by the drilling machine, and a drive control circuit provided in the body unit to drive and control the motor and the electromagnet. The body unit has a battery receiving portion configured to detachably receive a battery. The drive control circuit is configured to drive and control the motor and the electromagnet by using a battery received in the battery receiving portion as a power source. The drilling machine has a battery cover attached to the drilling machine body unit, the battery cover being movable longitudinally and slidably relative to the drilling machine body unit between a retracted position and an advanced position relative to the battery loaded in the battery loading part, wherein when the battery cover is in the advanced position, the battery cover covers a gap between the drilling machine body unit and the battery from above and is located in a travel path of the battery along which the battery moves when the battery loaded in the battery loading part is unloaded therefrom, so that the battery cannot be unloaded from the battery loading part.

More preferably, the drive control circuit may have an electromagnet control section controlling electric power to be supplied to the electromagnet from the battery.

More preferably, the drive control circuit may further have a remaining battery capacity detection section detecting the remaining capacity of the battery, and the electromagnet control section may control the electric power to be supplied to the electromagnet on the basis of the remaining capacity of the battery detected by the remaining battery capacity detection section so that the electric power to be supplied to the electromagnet is kept substantially constant.

With the above-described structure, the electric power supplied to the electromagnet can be maintained at a predetermined value even if the voltage drops as a result of a reduction in the remaining capacity of the battery. In other words, the magnetic holding power of the electromagnet can be kept constant irrespective of a change in the remaining capacity of the battery.

More preferably, the electromagnet control section may control the electric power to be supplied to the electromagnet so that the electric power to be supplied to the electromagnet is smaller when the motor is not driven than when the motor is driven.

When the motor is not driven, no strong external force is applied to the drilling machine from the drilling tool; therefore, there is no need of so strong magnetic holding power as during drilling process to securely hold the drilling machine. In this regard, the drilling machine can reduce the electric power to be supplied to the electromagnet when the motor is not driven. Therefore, it is possible to suppress useless consumption of the battery and to further extend the serviceable time of the drilling machine.

Preferably, when the motor is to be stopped, the drive control circuit may stop the supply of electric power to the motor and control the electromagnet control section so that the electric power to be supplied to the electromagnet is maintained for a predetermined period of time in a state thereof before the supply of electric power to the motor is stopped, and that the electric power to be supplied to the electromagnet is reduced after the predetermined period of time has elapsed.

Immediately after the supply of electric power to the motor has been stopped, the drilling tool continues to rotate for a while by inertia. Therefore, the drilling machine may receive a strong external force from the drilling tool. There is also a possibility that the operator is still applying an external force to operate the drilling machine. Accordingly, if the supply of electric power to the electromagnet is stopped or the electric power to be supplied to the electromagnet is reduced at the same time as the supply of electric power to the motor is stopped, the magnetic hold of the electromagnet may be broken by the above-described external forces, resulting in a dangerous situation such as a fall of the drilling machine. In this regard, the drilling machine can reduce the danger described above because the supply of electric power to the electromagnet is maintained as it is for a while after the supply of electric power to the motor has been stopped.

More preferably, the electromagnet control section may switch on and off electrical conduction between the battery and the electromagnet to convert a direct current from the battery into a periodic pulse current and control the duty ratio of the pulse current, so that average electric power to be supplied to the electromagnet per unit of time is controlled by adjusting the duty ratio.

Preferably, the drive control circuit may further have a motor current detection section detecting the value of electric current supplied to the motor from the battery, and the electromagnet control section may control the electric power to be supplied to the electromagnet on the basis of the electric current value detected by the motor current detection section.

Detecting the value of electric current flowing through the motor enables estimation of a load condition on the motor, i.e. estimation of an external force exerted on the drilling tool, and adjustment of the electric power to be supplied to the electromagnet in accordance with the magnitude of the external force. Consequently, when the external force is small, the electric power to be supplied to the electromagnet is further reduced to suppress useless power consumption, thereby making it possible to realize further reduced power consumption.

Preferably, the drive control circuit may further have a tilt detection circuit detecting a tilt angle of the drilling machine. The drive control circuit may change the magnitude of electric power to be supplied to the electromagnet from the battery through the electromagnet control section according to the magnitude of the tilt angle of the drilling machine detected by the tilt detection circuit when the drilling machine is securely held in a position for a drilling operation.

The drilling machine driven by the battery may be used with the drilling machine held not only on a horizontal place but also on a sloped surface or a vertical wall or even a ceiling. When the drilling machine is securely held on a non-horizontal place, the electromagnet will have to support also the gravitational force of the drilling machine by its magnetic holding power. Accordingly, the magnetic holding power required to securely and safely hold the drilling machine increases as the tilt angle of the drilling machine increases. The magnitude of electric power to be supplied to the electromagnet is changed according to the magnitude of the tilt angle of the drilling machine. Therefore, when the tilt angle is large, a relatively large electric power is supplied to the electromagnet to generate a large magnetic holding power, whereas when the tilt angle is small, a relatively small electric power is supplied to the electromagnet, thereby enabling reduction in consumption of useless power.

Preferably, the drive control circuit may be arranged as follows. The drive control circuit stores, as an initial tilt angle, a tilt angle of the drilling machine detected by the tilt detection circuit when the motor is started to be driven. When the difference between the initial tilt angle and a tilt angle detected during drive of the motor exceeds a permissible tilt angle, the drive control circuit stops the motor.

When there is a change in the tilt angle of the drilling machine during drive of the motor, the drilling machine is likely to have fallen down because the magnetic hold of the electromagnet has be broken by some accident. Therefore, in such a case, the motor is automatically stopped to protect the operator from danger.

More preferably, the drive control circuit may have a motor control section controlling electric power to be supplied to the motor. The motor control section may control the electric power to be supplied to the motor so that the electric power supplied to the motor from the battery during a predetermined period of time from the start of supplying electric power to the motor is smaller than electric power supplied after the predetermined period of time has elapsed.

Specifically, the motor control section may switch on and off electrical conduction between the battery and the motor to convert a direct current from the battery to be supplied to the motor into a periodic pulse current and control the duty ratio of the pulse current.

More specifically, the motor control section may gradually increase the duty ratio of the pulse current to be supplied to the motor from 0 to 1 over the above-described predetermined period of time.

Reducing the electric power to be supplied to the motor at starting makes it possible to prevent occurrence of a large inrush current. Further, provision of the motor current detection section will enable diagnosis of a failure in the motor control section by measuring whether or not the electric current value at starting is excessively large.

Preferably, the drilling machine may further have an external power supply inlet. When an external power supply is connected to the external power supply inlet, one of the battery received in the battery receiving portion and the external power supply connected to the external power supply inlet is selectively used as a power source for driving and controlling the motor and the electromagnet.

The drilling machine is basically driven by a battery but may be configured to use an external power supply also as a power source. Thus, an external power supply is used where one is available, thereby suppressing the consumption of electric power charged in the battery. It is also possible to charge the battery mounted on the drilling machine by using the external power supply.

An embodiment of the drilling machine according to the present invention will be explained below with reference to the accompanying drawings.

### Brief Description of Drawings:

Fig. 1 is a perspective view of a drilling machine according to an embodiment of the present invention as seen from the left front side of the drilling machine.
Fig. 2 is a perspective view of the drilling machine shown in Fig. 1, as seen from the right front side of the drilling machine.
Fig. 3 is a partially sectioned view of the drilling machine shown in Fig. 1.
Fig. 4 is a rear perspective view of the drilling machine shown in Fig. 1 with a battery mounted thereon.
Fig. 5 is a rear perspective view of the drilling machine shown in Fig. 4 with the battery unmounted therefrom.
Fig. 6 is a circuit block diagram showing a drive control circuit.
Fig. 7 is a flowchart showing the operation of the drilling machine.
Fig. 8 is another circuit block diagram showing a drive control circuit.
Fig. 9 is still another circuit block diagram showing the drive control circuit.
Fig. 10 is a further circuit block diagram showing the drive control circuit.
Fig. 11 is a still further circuit block diagram showing the drive control circuit.

### Description of Embodiments:

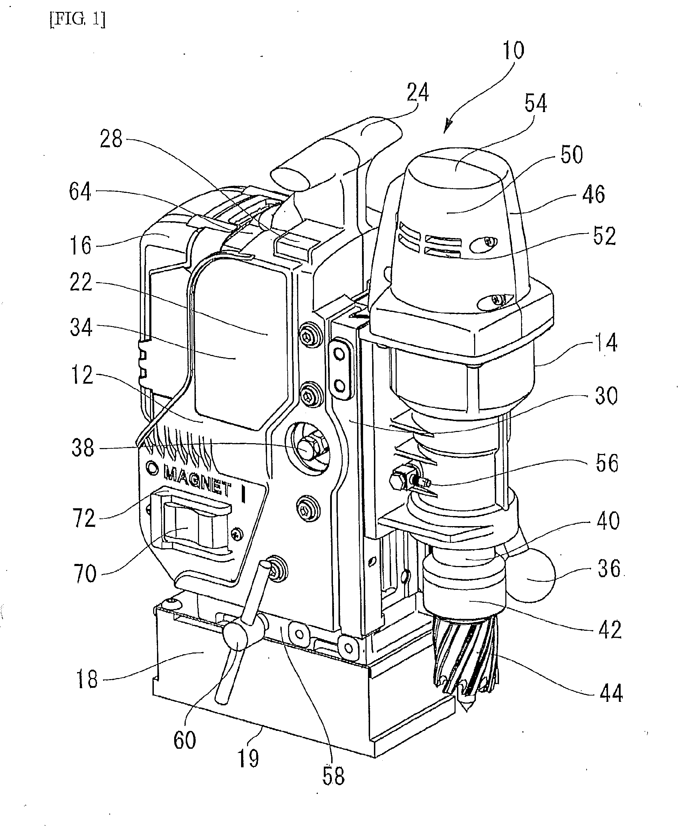

As shown in Figs. 1 to 5, a drilling machine 10 according to the present invention is a battery-operated portable drilling machine having a body unit 12, a drilling drive unit 14 attached to the front of the body unit 12 so as to vertically reciprocate relative to the body unit 12, a battery 16 mounted in the rear upper part of the body unit 12, and an electromagnet 18 attached to the bottom of the body unit 12 to securely hold the body unit 12 in a position for a drilling operation by the drilling machine 10.

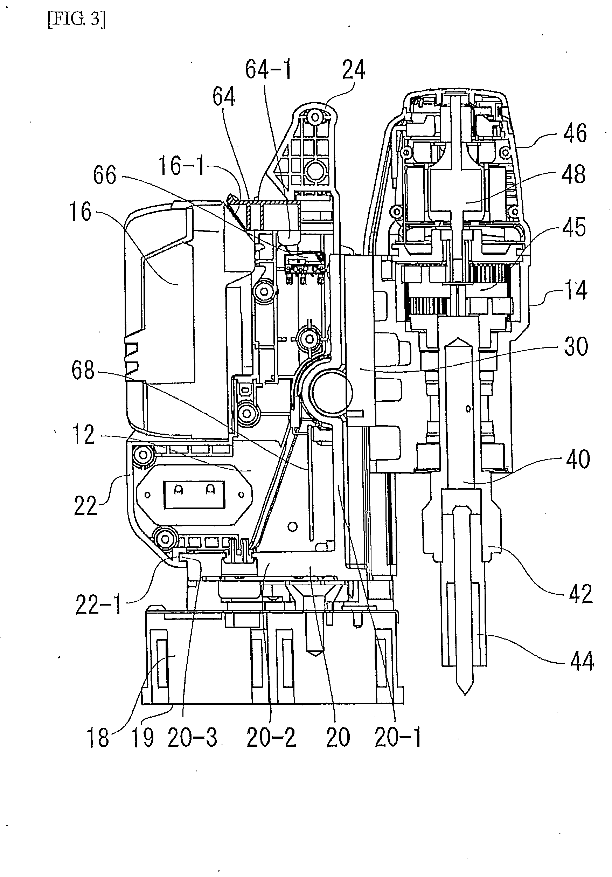

The body unit 12 has, as shown in Fig. 3, an L-shaped body base 20 and a body housing 22. The body base 20 comprises a front wall portion 20-1 to which the drilling drive unit 14 is attached, and a bottom wall portion 20-2 to which the electromagnet 18 is attached. The body housing 22 is jointed to the body base 20 to form an interior space. The body base 20 is made of aluminum to ensure necessary and sufficient strength, while the body housing 22 is made of a resin material to achieve a reduction in weight. The joint between the body base 20 and the body housing 22 has what is called a labyrinth structure where a joint projection 20-3 of the body base 20 is fitted into a joint recess 22-1 of the body housing 22. Thus, the body unit 12 has a structure that prevents foreign matter such as dust or water from easily entering the interior space through the joint between the body base 20 and the body housing 22. In addition, an LED indicator 28 comprising green, yellow and red LEDs is provided near a grip 24 on the top of the body unit 12. The LED indicator 28 displays various statuses of the drilling machine 10 by colors and blink patterns to inform the operator about the present status of the drilling machine 10, as will be described later.

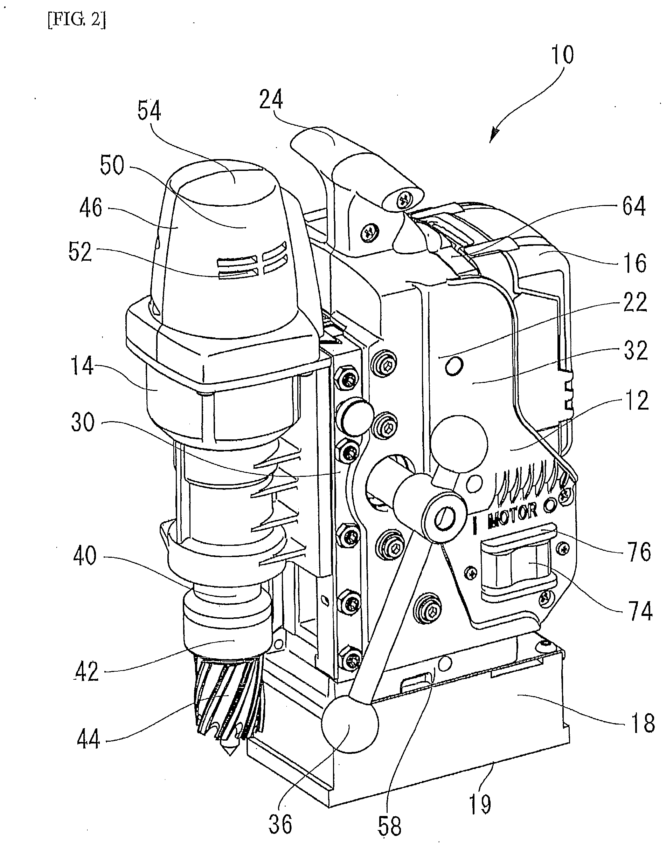

The drilling drive unit 14 is vertically movably attached to the body unit 12 through a slide mechanism 30 provided therebetween which has a dovetail-groove structure. The slide mechanism 30 has a rack-and-pinion structure comprising a rack (not shown) provided on the drilling drive unit 14 and a pinion (not shown) provided on the body unit 12. By manually rotating a feed handle 36 removably attached to a right side 32 (see Fig. 2) of the body unit 12, the pinion is rotated, causing the drilling drive unit 14 to move vertically relative to the body unit 12. It should be noted that the feed handle 36 can also be attached to a handle mounting part 38 provided on a left side 34 (see Fig. 1) of the body unit 12. Thus, the feed handle 36 can be positioned on either of the right and left sides of the body unit 12 according to each particular situation. The drilling drive unit 14 is provided at the lower end thereof with a drilling tool fitting part 42 connected to an arbor 40. The drilling tool fitting part 42 is fitted with a drilling tool 44 such as a drill or an annular cutter. The arbor 40 is connected through a speed reducer 45 to a motor 48 (see Fig. 3) provided in a motor cover 46 at the upper end of the drilling drive unit 14. The drilling tool 44 is driven to rotate by driving the motor 48. The motor cover 46 has a plurality of vent holes 52 provided in a side 50 thereof to cool the motor 48 by air flowing in through the vent holes 52. The reason why the vent holes 52 are provided not in the top 54 but in the side 50 is to prevent, as much as possible, water or foreign objects such as machining swarf and dust from entering the inside of the motor cover 46. The left side of the drilling drive unit 14 is provided with a plug 56 serving as a cutting fluid filler port. A one-touch socket with hose is attached to the plug 56 to supply a cutting fluid to the drilling tool 44 during drilling process.

The drilling machine 10 is set on a workpiece made of a magnetic material, e.g. iron, such that a bearing surface 19 of the electromagnet 18 attached to the bottom of the body unit 12 is placed at a position for a drilling operation. When supplied with electric power in this state, the electromagnet 18 generates a magnetic field and thus magnetically adheres to the workpiece of magnetic material, thereby securely holding the drilling machine 10 in the drilling operation position. A positioning mechanism 58 is provided between the electromagnet 18 and the body unit 12 to allow the position of the body unit 12 to be adjusted both longitudinally and laterally relative to the electromagnet 18 by turning a positioning handle 60 removably attached to the positioning mechanism 58. It should be noted that the positioning handle 60 can also be attached to the right side of the positioning mechanism 58.

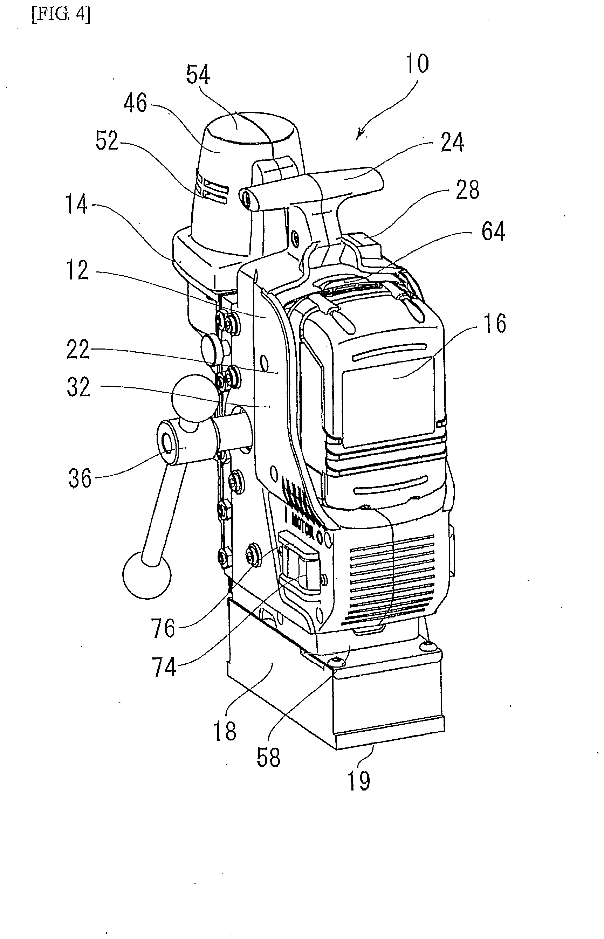

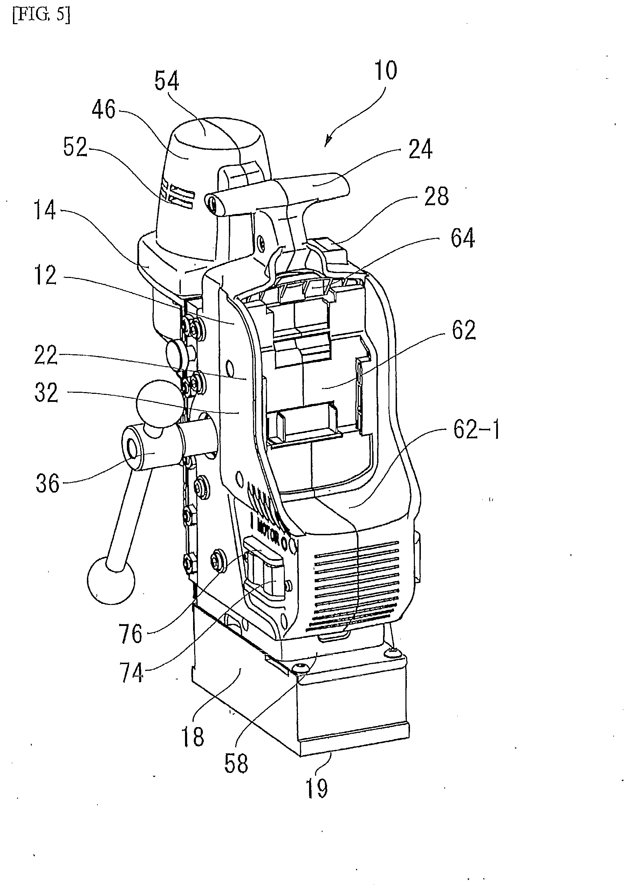

As shown in Figs. 4 and 5, the body unit 12 has a battery receiving portion 62 provided at the rear top thereof to receive the battery 16. The battery 16 is removably mounted in the battery receiving portion 62. When the battery 16 is in the mounted position, connecting terminals (not shown) thereof face downward to prevent water from easily entering the battery 16. When the battery 16 is mounted, a battery cover 64 longitudinally slidably provided at the top of the battery receiving portion 62 projects rearward from the body unit 12 to abut against an inclined cover engaging surface 16-1 (see Fig. 3) of the battery 16. When in the rearwardly projecting position, the battery cover 64 covers the gap between the body unit 12 and the battery 16 from above. Therefore, machining swarf or water can be prevented from entering the terminal part of the battery 16. Further, when in the mounted state, the battery 16 cannot move upward because of the interference with the battery cover 64 and therefore cannot be removed from the body unit 12. To remove the battery 16, the battery cover 64 is pushed forward to retract into the body unit 12, and then the battery 16 is pulled out upward. The provision of the battery cover 64 prevents the battery 16 from becoming dislodged accidentally. In addition, the battery cover 64 has a downward projecting switch engaging projection 64-1 (see Fig. 3) provided on a part thereof located in the body unit 12. When the battery cover 64 projects rearward to abut against the battery 16, the switch engaging projection 64-1 pushes to turn on a limit switch 66 (see Fig. 3) provided in the body unit 12. When the battery cover 64 retracts forward, the switch engaging projection 64-1 turns off the limit switch 66 (see Fig. 3). The limit switch 66 is connected to a drive control circuit 68 (see Fig. 3) provided in the body unit 12. The limit switch 66 is used to monitor whether or not the battery 16 is correctly mounted and whether or not the battery 16 is undesirably removed. The battery receiving portion 62 has a bottom surface 62-1 gently sloped downward from the front toward the rear so that water or the like will not collect therein. The mounted battery 16 is electrically connected to the drive control circuit 68 provided in the interior space of the body unit 12 to supply electric power to the motor 48 and the electromagnet 18 through the drive control circuit 68. The electric power to be supplied from the battery 16 to the motor 48 and the electromagnet 18 is appropriately controlled by the drive control circuit 68 according to the conditions of the drilling machine 10 so that safety can be sufficiently ensured while suppressing the power consumption, as will be detailed later.

As shown in Figs. 1 and 2, the left side 34 of the body unit 12 is provided with an electromagnet switch 70 for starting the electromagnet 18. A wall 72 is provided around the electromagnet switch 70 to prevent the switch 70 from being operated carelessly. The electromagnet switch 70 is configured to be turned off by pressing the rear (left as seen in Fig. 1) end portion thereof. The wall 72 is raised in height at its rear end portion so that the electromagnet switch 70 is not easily switched accidentally, particularly from on to off. The right side 32 of the body unit 12 is provided with a motor switch 74 for starting the motor 48. A wall 76 is also provided around the motor switch 74 to prevent the motor switch 74 from being operated carelessly.

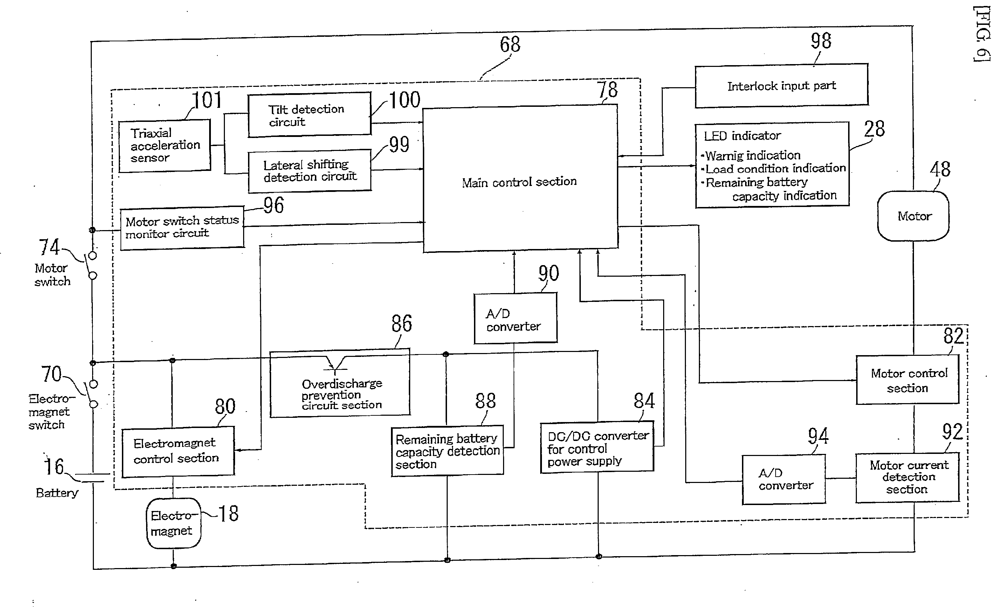

The drive control circuit 68 for controlling the drive of the motor 48 and the electromagnet 18 is provided in the body unit 12. As shown in Fig. 6, the drive control circuit 68 has a main control section 78 having a CPU, an electromagnet control section 80 controlling the electromagnet 18 on the basis of a control signal from the main control section 78, and a motor control section 82 controlling the motor 48 on the basis of a control signal from the main control section 78. The electromagnet control section 80 is equipped with a field-effect transistor (FET). The FET functions as a switching element and sequentially switches on and off electrical conduction between the battery 16 and the electromagnet 18 to convert a direct current from the battery 16 into a pulse current consisting of a periodic pulse train. The electromagnet control section 80 changes the switching timing of the FET so as to modulate the pulse width of the pulse current on the basis of a control signal from the main control section 78, thereby controlling the average electric power to be supplied to the electromagnet 18. More specifically, the electromagnet control section 80 uses pulse width modulation (PWM) control to control the average electric power per unit of time to be supplied to the electromagnet 18. In this way, the electromagnet control section 80 adjusts the average electric power to be supplied to the electromagnet 18 to generate a magnetic force with a magnitude required for each particular situation. The motor control section 82 is also equipped with a field-effect transistor (FET) in the same way as the electromagnet control section 80. The motor control section 82 also uses pulse width modulation to control the average electric power to be supplied to the motor 48. The control of electric energy for the electromagnet 18 and the motor 48 will be detailed later.

The drive control circuit 68 has a DC/DC converter 84 connected to the battery 16. The DC/DC converter 84 steps down the voltage of the battery 16, i.e. 24 V, to a voltage of 5 V, which is supplied as electric power for driving the drive control circuit 68. The electromagnet switch 70 is interposed between the battery 16 and the drive control circuit 68. When the electromagnet switch 70 is off, the drive control circuit 68 is not supplied with electric power, and hence the motor 48 is not driven. An overdischarge prevention circuit section 86 comprising a transistor is provided between the battery 16 and the DC/DC converter 84. When the voltage of the battery 16 drops below a predetermined value, the overdischarge prevention circuit section 86 cuts off the battery 16 so that no more electric current will flow, thereby preventing deterioration of the battery 16 due to overdischarge. The drive control circuit 68 is further provided with a remaining battery capacity detection section 88 detecting the remaining capacity of the battery 16. The remaining battery capacity detection section 88 detects the remaining capacity of the battery 16 by measuring the voltage of the battery 16 and outputs an analog signal corresponding to the value of the measured voltage of the battery 16. The analog signal is converted into a digital signal by an A/D converter 90 before being sent to the main control section 78. The main control section 78 controls the electromagnet control section 80 on the basis of the received battery voltage value to adjust the electric power to be supplied to the electromagnet 18, as will be described later. It should be noted that the remaining battery capacity detection section 88 may be configured to detect the remaining capacity of the battery 16 by measuring the value of electric current from the battery 16. The drive control circuit 68 is further provided with a motor current detection section 92 for measuring the value of electric current flowing through the motor 48. The motor current detection section 92 outputs an analog signal corresponding to the measured electric current value. The analog signal is converted into a digital signal by an A/D converter 94 before being sent to the main control section 78. The main control section 78 judges the present status of the motor 48 on the basis of the received motor current value and changes the electric power to be supplied to the electromagnet 18 or stops the motor 48 according to the judged present status of the motor 48. Further, the drive control circuit 68 is provided with a motor switch status monitor circuit 96 monitoring the on/off status of the motor switch 74. In addition, the drive control circuit 68 is provided with a tilt detection circuit 100 which detects a tilt angle of the drilling machine 10 from a reference angle (zero degree) corresponding to an angle in the condition where the drilling machine 10 is set with the bearing surface 19 placed horizontally. The tilt detection circuit 100 detects the tilt angle of the drilling machine 10 with a triaxial acceleration sensor 101. Further, the drive control circuit 68 is provided with a lateral shifting detection circuit 99 which detects lateral shifting of the drilling machine 10 on the basis of an output from the triaxial acceleration sensor 101. The triaxial acceleration sensor 101 is shared with the tilt detection circuit 100 and the lateral shifting detection circuit 99.

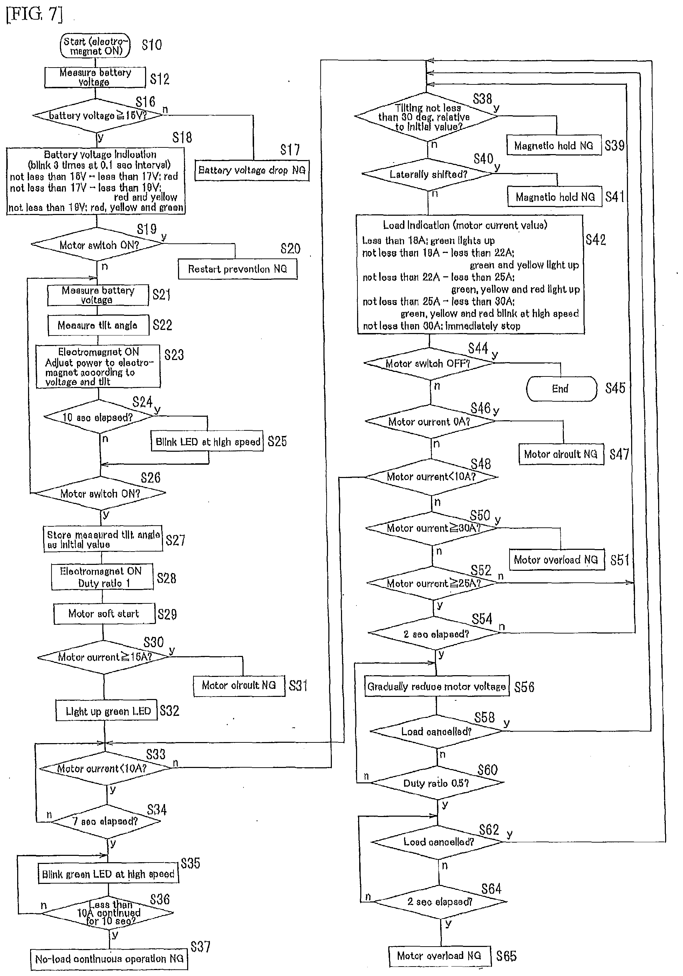

The operation of the drilling machine 10 will be explained below on the basis of the flowchart of Fig. 7. When the electromagnet switch 70 is turned on, the power source is supplied to the drive control circuit 68 to start control (S10). First, the drive control circuit 68 measures the voltage of the battery 16 with the remaining battery capacity detection section 88 (S12). The drive control circuit 68 subsequently checks whether or not the detected voltage value of the battery 16 is not less than a predetermined value (15 V) (S16). If the detected voltage value is less than 15 V, the drive control circuit 68 shifts from the normal control mode to an NG control mode (S17). The drive control circuit 68 enters an NG control mode when some abnormality occurs in the drilling machine 10 or when it is judged that an inappropriate operation has been performed. In the NG control mode, the motor 48 is stopped, and other necessary safety measures are taken. In addition, the operator is informed of the abnormality by the LED indicator 28. In the NG control mode executed when an abnormal drop of the battery voltage is detected (S17), the motor 48 is disabled from being driven even if the motor switch 74 is turned on, and the red LED of the LED indicator 28 is blinked to inform the operator of the present battery status. When the detected voltage value of the battery 16 is not less than 15 V, the LED indicator 28 is blinked in different patterns according to the detected voltage value to inform the operator of the remaining capacity of the battery 16 (S18). More specifically, when the detected voltage value is not less than 15 V and less than 17 V, the red LED is blinked. When the voltage value is not less than 17 V and less than 19 V, the red and yellow LEDs are blinked. When the voltage value is not less than 19 V, the red, yellow, and green LEDs are blinked.

The drive control circuit 68 subsequently checks the on/off status of the motor switch 74 with the motor switch status monitor circuit 96 (S19). It is dangerous if the motor 48 is unexpectedly driven at the same time as the electromagnet switch 70 is turned on. Therefore, if the motor switch 74 has already been turned on when the electromagnet switch 70 is turned on, the drive control circuit 68 shifts to an NG control mode (S20) in which the motor 48 is disabled from being driven even if the motor switch 74 is on, and the green LED is blinked to inform the operator of the present status of the motor switch 74. Once the motor switch 74 is turned off, the drive control circuit 68 returns to the normal control mode from the NG control mode.

If the motor switch 74 is off when the electromagnet switch 70 is turned on to drive the electromagnet 18, the drive control circuit 68 measures the voltage value of the battery 16 until the motor switch 74 is turned on (S21), and measures the tilt angle of the drilling machine 10 through the tilt detection circuit 100 (S22). The electromagnet control section 80 adjusts the electric power to be supplied to the electromagnet 18 on the basis of the measured voltage value of the battery 16 and the measured tilt angle (S23). More specifically, the electromagnet control section 80 adjusts the electric power to be supplied to the electromagnet 18 by using pulse width modulation (PWM) as stated above. That is, the electromagnet control section 80 changes the ratio of on-time and off-time (duty ratio) of the FET incorporated therein, thereby changing the pulse width of the pulse current to control the average electric power per unit of time, and thus controlling the electric power to be supplied to the electromagnet 18. When the motor 48 has not yet been started, the drilling machine 10 is not subjected to external force as strong as during drilling. Therefore, the magnetic force for securely holding the drilling machine 10 need not be as strong as during drilling, and the electric power to be supplied to the electromagnet 18 also need not be as large as during drilling. For this reason, when the drilling machine is in the standby state, the duty ratio is minimized to prevent the consumption of unnecessarily large electric power. In this embodiment, when the tilt angle of the drilling machine 10 is less than 30 degrees in the standby state, the duty ratio is set to 0.5 as long as the battery 16 is full charged, i.e. the battery voltage is 24 V. However, the voltage of the battery 16 gradually drops as the remaining capacity decreases with use. Therefore, if the electromagnet 18 is controlled with the same duty ratio all the time, the electric power supplied to the electromagnet 18 also gradually decreases, and eventually, it becomes impossible to obtain magnetic holding power sufficiently strong to hold the drilling machine 10. If a rather large duty ratio is set from the start in expectation of a voltage drop, a correspondingly large amount of electric power will be uselessly consumed. Therefore, in the drilling machine 10, the duty ratio is changed on the basis of the voltage value of the battery 16 measured by the remaining battery capacity detection section 88. For example, when the voltage of the battery 16 drops from 24 V to 20 V, the duty ratio is increased from 0.5 to 0.6, thereby allowing the average electric power supplied to the electromagnet 18 to be kept substantially constant. By so doing, optimum electric power is supplied to the electromagnet 18 irrespective of the voltage of the battery 16, and the consumption of unnecessarily large electric power is prevented. Thus, electric power saving is realized. On the other hand, the drilling machine 10 is prevented from becoming dislodged, which might otherwise occur owing to a reduction of the magnetic holding power, thereby ensuring safety. When the tilt angle of the drilling machine 10 is not less than 30 degrees, the duty ratio determined on the basis of the voltage value of the battery 16 as stated above is further changed to a larger value to increase the magnetic holding power of the electromagnet 18. Next, the drive control circuit 68 counts time until the motor switch 74 is turned on (S24). After 10 seconds or more has elapsed, the green LED of the LED indicator 28 is blinked at high speed to inform the operator that the electromagnet 18 is left on (S25).

When the motor switch 74 is turned on in a state where the normal starting has been made and where the drive control circuit 68 is in the normal control mode (S26), the tilt detection circuit 100 measures the tilt angle of the drilling machine 10, and the drive control circuit 68 stores the measured tilt angle as an initial tilt angle (S27). Subsequently, the electromagnet control section 80 increases the duty ratio of the pulse current to be supplied to the electromagnet 18 to 1 (S28). In other words, the direct current from the battery 16 is supplied directly to the electromagnet 18 to maximize the magnetic holding power. Meanwhile, the motor control section 82 starts to control the motor 48. Consequently, electric power is supplied to the motor 48, and the motor 48 starts to be driven to rotate. At this time, the motor control section 82 controls the electric power so that the electric power to be supplied to the motor 48 gradually increases immediately after the motor switch 74 has been turned on (S29). More specifically, the motor control section 82 gradually increases the duty ratio of the pulse current to be supplied to the motor 48 from 0 to 1 over about 2 seconds after the motor switch 74 has been turned on. Performing such soft-start control allows suppression of occurrence of a large inrush current and thus makes it possible to prevent damage to the circuit and the battery. It is also possible to diagnose a failure of the FET in the motor control section 82. More specifically, when the FET in the motor control section 82 is operating normally, the duty ratio of the pulse current is small immediately after the motor switch 74 has been turned on; therefore, the electric current value detected by the motor current detection section 92 must be small. However, if the FET is shortcircuited, no pulse current can be formed, and the direct current from the battery 16 will flow directly, resulting in a large current value (not less than 15 A) being detected. Accordingly, it is possible to judge that the FET is broken from the detection of a large current value (S30). If it is judged that the FET is broken, the drive control circuit 68 shifts to an NG control mode in which the red and green LEDs are alternately blinked to inform the operator of the abnormality (S31).

When the duty ratio of the pulse current to be supplied to the motor 48 has increased to 1 as a result of the normal operation of the FET in the motor control section 82, the green LED of the LED indicator 28 lights up to indicate that the motor 48 is being driven normally (S32). Even after the rotational drive of the motor 48 has been started normally, the motor current detection section 92 continues to detect the value of electric current flowing through the motor 48, thus continuing to monitor the load condition of the motor 48. Immediately after the motor 48 has been started to be driven, the motor 48 is usually in a no-load condition; therefore, the electric current flowing through the motor 48 is small, i.e. less than 10 A in the drilling machine 10 according to this embodiment. After the drilling tool 44 has contacted the workpiece to start drilling, the load on the motor 48 increases. Consequently, a large electric current not less than 10 A flows. In other words, the drilling status of the drilling machine 10 can be judged by detecting the electric current flowing through the motor 48. The drive control circuit 68 detects the electric current value of the motor 48 with the motor current detection section 92 (S33), and counts time while the electric current value is less than 10 A after the motor 48 has been started to be driven (S34). If this state continues for 7 seconds or more, the green LED is blinked at high speed (S35). If the above-described state continues for 10 seconds or more (S36), the drive control circuit 68 shifts to an NG control mode (S37). In the NG control mode, the motor control section 82 sets the duty ratio to 0 to stop the supply of electric power to the motor 48 and thus to stop the motor 48. In this way, the motor 48 is prevented from being driven for a long time in a state where no drilling is performed, and thus useless consumption of electric power is avoided.

When drilling is started and the electric current value increases to not less than 10 A within 10 seconds after the motor 48 has been driven, the drive control circuit 68 measures the tilt angle of the drilling machine 10 through the tilt detection circuit 100 and checks whether or not the drilling machine 10 tilts at an angle of not less than 30 degrees relative to the initial tilt angle set at step S27 (S38). If the tilt angle is less than 30 degrees relative to the initial tilt angle, the drive control circuit 68 checks by using the lateral shifting detection circuit 99 whether or not the drilling machine 10 has undesirably shifted (S40). If the drilling machine 10 tilts at an angle of not less than 30 degrees or has undesirably shifted, there is a strong possibility that the magnetic hold of the electromagnet 18 has been broken; therefore, the drive control circuit 68 shifts to a magnetic hold NG control mode in which the drive of the motor 48 is forcibly stopped (S39, S41). If there is no abnormal tilting or shifting of the drilling machine 10, the LED indicator 28 is lit up or blinked in different patterns according to the magnitude of electric current flowing through the motor 48 to indicate the load condition on the motor 48 (S42). More specifically, when the electric current value is less than 18 A, the green LED lights up. When the electric current value is not less than 18 A and less than 22 A, the green and yellow LEDs light up. When the electric current value is not less than 22 A and less than 25 A, the green, yellow, and red LEDs light up. When the electric current value is not less than 25 A and less than 30 A, the green, yellow, and red LEDs blink at high speed. When the motor switch 74 is turned off (S44), the supply of electric power to the motor 48 stops, and thus the motor 48 is stopped (S45). If the detected electric current value is 0 A when the motor switch 74 is on (S46), it is likely that the circuit is disconnected or the brush of the motor 48 is unable to conduct electric current because of wear; therefore, the drive control circuit 68 shifts to an NG control mode in which the duty ratio is set to 0 by the motor control section 82, and the green and red LEDs are alternately blinked to inform the operator of the abnormality (S47). If the electric current value decreases back to less than 10 A (S48), it is judged that the motor 48 is in a no-load condition, and the drive control circuit 68 returns to the step of counting time (S34). If the electric current value increases to not less than 30 A during drilling (S50), it is likely that the motor 48 may be broken by an excessively high load thereon, or the circuit board substrate, wire, battery, etc. may be broken by a large electric current; therefore, the drive control circuit 68 shifts to an NG control mode to stop the motor 48 (S51). When the motor 48 is to be stopped, the supply of electric power to the motor 48 is stopped. In this regard, immediately after the supply of electric power to the motor 48 has been stopped, the motor 48 and the drilling tool 44 continue to rotate for a while by inertia. There is also a possibility of the operator applying a force with the feed handle 36 to press the drilling tool 44 against the workpiece. Therefore, for first 2 seconds after the supply of electric power to the motor 48 has been stopped, the electromagnet 18 is left as it is with the duty ratio unchanged at 1 to keep the drilling machine 10 magnetically held with strong magnetic holding power, thereby preventing the drilling machine 10 from becoming dislodged. After 2 seconds has elapsed, the duty ratio is reduced to about a half, i.e. 0.5, to place the drilling machine 10 in the above-described standby state. By so doing, useless electric power consumption is suppressed while ensuring safety at the time of emergency stop of the motor 48. When the electric current value is not less than 25 A and less than 30 A (S52), it is judged that the load on the motor 48 is somewhat high. If this state continues for 2 seconds or more (S54), the motor control section 82 gradually reduces the duty ratio of the pulse current to be supplied to the motor 48 (S56), and the motor current detection section 92 checks whether or not the electric current value has decreased to less than 25 A (S58). If the overload condition cannot be cancelled and hence the electric current value cannot be reduced to less than 25 A even by reducing the duty ratio to 0.5 (S60, S62), the drive control circuit 68 shifts to an NG control mode as in the case of detecting an electric current of not less than 30 A. In the NG control mode, the supply of electric power to the motor 48 is stopped and the electromagnet 18 is maintained in the state of being energized with a duty ratio of 1 for a predetermined period of time immediately after the supply of electric power to the motor 48 has been stopped, and after the predetermined period of time has elapsed, the duty ratio is reduced to about a half, i.e. 0.5, as has been stated above (S65). The reason why the motor 48 is not stopped immediately at steps S52 to S65 is to prevent degradation of operability which would otherwise be caused by the frequent stopping of the motor 48. The reason why the electric power to be supplied to the motor 48 is gradually reduced is that, if the motor 48 is stopped abruptly, the inertia of the motor 48, etc. will be transmitted to the cutting edge of the drilling tool 44, causing damage to the cutting edge.

The battery cover 64 provided on the body unit 12 projects rearward to retain the battery 16 when the battery 16 is normally mounted so as to prevent the battery 16 from falling off, and turns on the limit switch 66 with the switch engaging projection 64-1, as has been stated above. The limit switch 66 functions as an interlock input part 98 connected to the drive control circuit 68. If the battery cover 64 is caused to slide forward to turn off the limit switch 66 while the motor 48 is being driven, the drive control circuit 68 detects that the limit switch 66 has been turned off, and shifts to an NG control mode to stop the drive of the motor 48. In the interlock NG control mode also, the drive control circuit 68 stops the supply of electric power to the motor 48 and leaves the electromagnet 18 as it is with the duty ratio unchanged at 1 to keep the drilling machine 10 magnetically held with strong magnetic holding power for first 2 seconds after the supply of electric power to the motor 48 has been stopped. After 2 seconds has elapsed, the drive control circuit 68 reduces the duty ratio to place the drilling machine 10 in the above-described standby state.

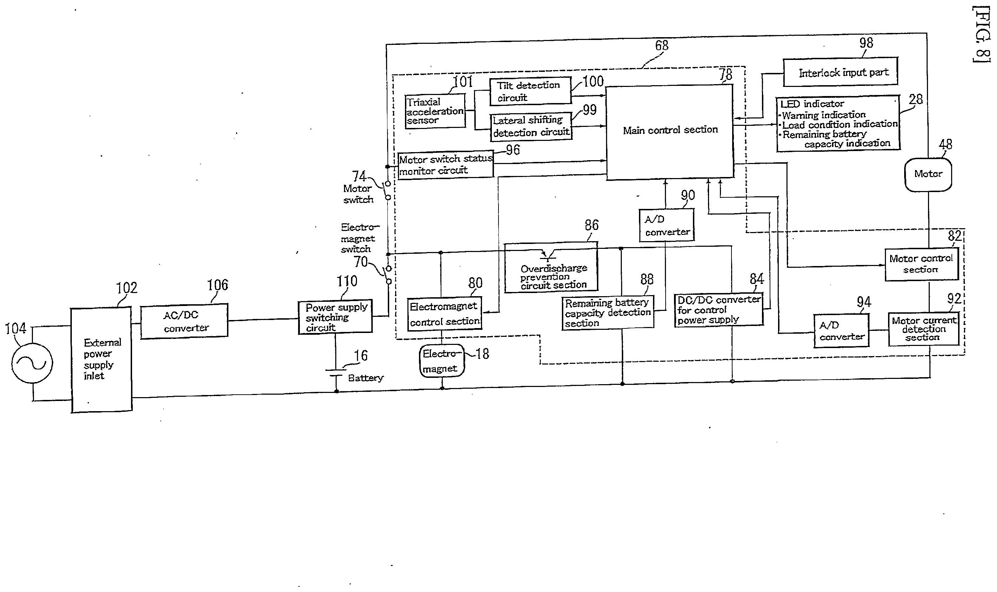

As shown in Fig. 8, the drilling machine 10 may be further provided with an external power supply inlet 102, an AC/DC converter 106, and a power supply switching circuit 110 to enable an external power source to be obtained by connecting a commercial power supply 104 to the external power supply inlet 102. The power supply switching circuit 110 may be a manual switch that can be actuated by the operator, so that the operator can selectively use the battery 16 or the commercial power supply 104, as desired, as a power source for the drilling machine 10 by manually switching the power supply switching circuit 110. Alternatively, the power supply switching circuit 110 may be configured to automatically select the commercial power supply 104, not the battery 16, when the commercial power supply 104 is connected to the external power supply inlet 102.

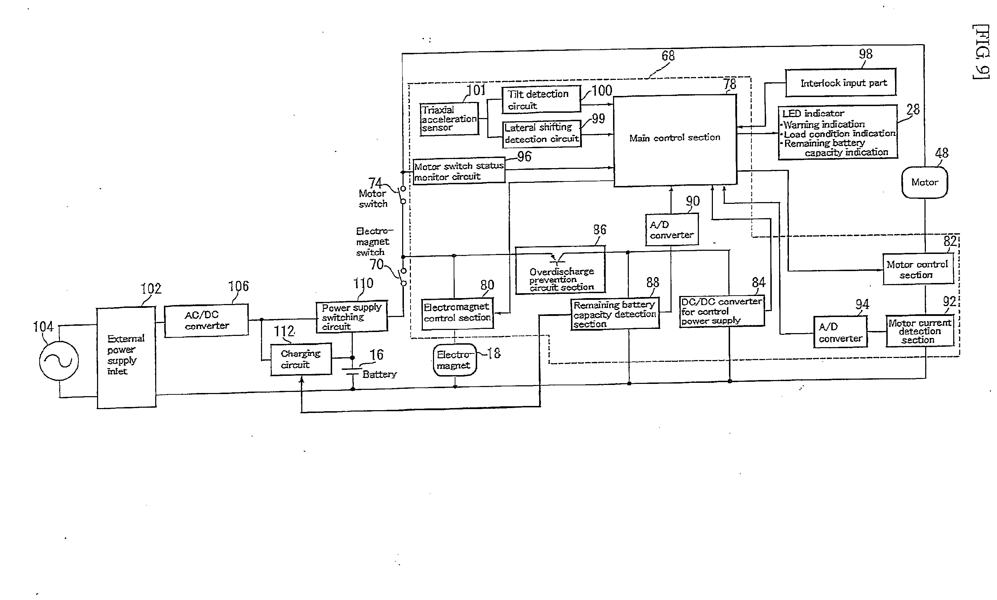

As shown in Fig. 9, the drilling machine 10 may have a charging circuit 112 in addition to the structural components shown in Fig. 8. When the commercial power supply 104 is connected to the external power supply inlet 102, the charging circuit 112 charges the battery 16 by using the electric power of the commercial power supply 104 when the remaining battery capacity detected by the remaining battery capacity detection section 88 is lower than a predetermined value. It should be noted that, during the charging of the battery 16, the commercial power supply 104 is used as a power source for the drilling machine 10.

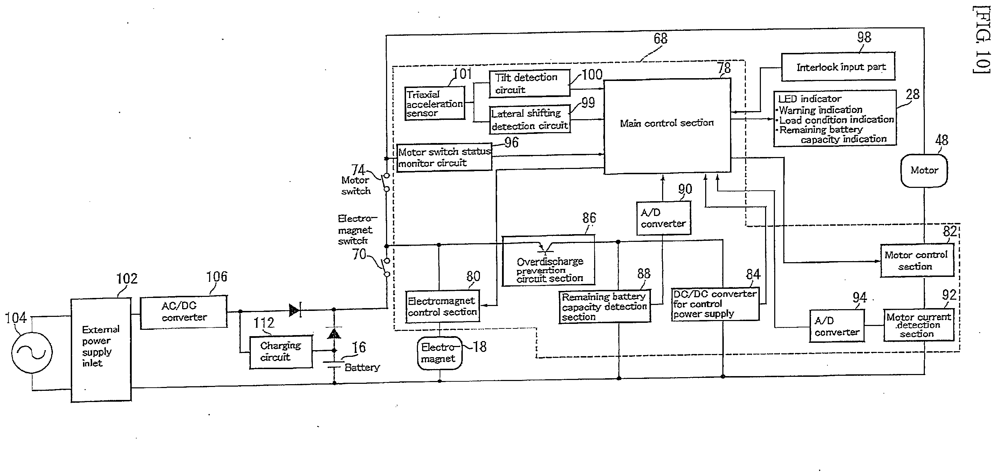

As shown in Fig. 10, the drilling machine 10 may have an external power supply inlet 102, an AC/DC converter 106, and a charging circuit 112. When a commercial power supply 104 is connected to the external power supply inlet 102, the drilling machine 10 uses the commercial power supply 104 as a power source in place of the battery 16, and the charging circuit 112 charges the battery 16 by using the commercial power supply 104. In this structure, the battery 16 is fixed to the body unit 12.

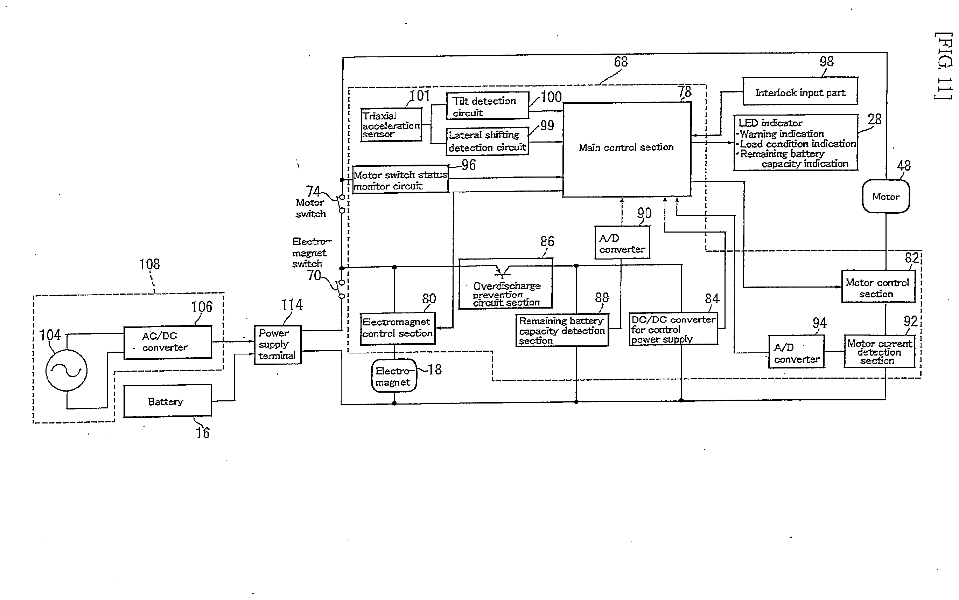

As shown in Fig. 11, the drilling machine 10 may have a power supply terminal 114 to which the battery 16 is connected. The power supply terminal 114 also has the function of the external power supply inlet 102 in Figs. 8 to 10. That is, an external power supply 108 can be connected to the power supply terminal 114. The battery 16 is temporarily disconnected from the power supply terminal 114, and instead the external power supply 108 is connected to the power supply terminal 114, thereby enabling the drilling machine 10 to be driven by the external power supply 108.

The drilling machine 10 uses the battery 16 as a power source to drive the motor 48 and the electromagnet 18. Accordingly, the drilling machine 10 is usable where an external power supply, e.g. a commercial power supply, is unavailable, and therefore has a widely expanded range of use. The use of the electromagnet 18 as the securing unit to securely hold the body unit brings about an advantage that the securing unit can be realized at a reduced cost and with a simplified structure as compared to the use of a permanent magnet. That is, if a permanent magnet is used to obtain a magnetic force needed to securely hold the drilling machine 10, a costly magnetic material (e.g. neodymium) must unavoidably be used, resulting in an increased cost. Further, it is necessary to provide a partition plate to block the magnetic flux and a mechanical structure, e.g. a gear or a lever, to move the partition plate. Consequently, the apparatus becomes undesirably complicated. The use of the battery 16 to drive the electromagnet 18 involves the problem of power consumption of the battery 16. However, the drilling machine 10 has a control scheme incorporated therein to minimize useless electric power consumption by appropriately controlling the electric power to be supplied to the electromagnet 18, as has been stated above. Therefore, it is possible to ensure sufficient battery run time in actual use. Meanwhile, if an abnormality is detected in the apparatus, the drive is stopped safely.

In the above-described embodiment, the duty ratio of the pulse current to be supplied to the electromagnet 18 when the motor 48 is being driven is set to 1, which is a maximum, except under abnormal circumstances. It is, however, not always necessary to do so. The duty ratio may be made to vary according to the load conditions on the motor 48, which may be judged from the value of electric current flowing through the motor 48. For example, the duty ratio may be varied as follows. At the beginning of the process of drilling the workpiece with the drilling tool 44, a relatively high load is applied to the motor 48; therefore, the duty ratio is increased. As the drilling condition becomes stable thereafter, the load somewhat decreases. Therefore, the duty ratio is reduced in accordance with the decrease of the load, thereby further suppressing the power consumption. The control performed in the electromagnet control section and the motor control section may be linear current control using an amplifier instead of the pulse width modulation control. It should be noted that the specific numerical values of the duty ratio, voltage, etc. in the foregoing embodiment are merely illustrative values and can be changed appropriately.

### List of Reference Signs:

drilling machine 10; body unit 12; drilling drive unit 14; battery 16; cover engaging surface 16-1; electromagnet 18; bearing surface 19; body base 20; front wall portion 20-1; bottom wall portion 20-2; joint projection 20-3; body housing 22; joint recess 22-1; grip 24; LED indicator 28; slide mechanism 30; right side 32; left side 34; feed handle 36; handle mounting part 38; arbor 40; drilling tool fitting part 42; drilling tool 44; speed reducer 45; motor cover 46; motor 48; side 50; vent holes 52; top 54; plug 56; position adjusting mechanism 58; position adjusting handle 60; battery receiving part 62; bottom surface 62-1; battery cover 64; switch engaging projection 64-1; limit switch 66; drive control circuit 68; electromagnet switch 70; wall 72; motor switch 74; wall 76; main control section 78; electromagnet control section 80; motor control section 82; DC/DC converter 84; overdischarge prevention circuit section 86; remaining battery capacity detection section 88; A/D converter 90; motor current detection section 92; A/D converter 94; motor switch status monitor circuit 96; interlock input part 98; lateral shifting detection circuit 99; tilt detection circuit 100; triaxial acceleration sensor 101; external power supply input part 102; commercial power supply 104; AC/DC converter 106; external power supply 108; power supply switching circuit 110; charging circuit 112; power supply terminal 114.

## Claims

1. A drilling machine (10) comprising:
a drilling drive unit (14) having a motor (48) for rotationally driving a drilling tool (44);
a drilling machine body unit (12) having a battery loading part configured to have a battery (16) for supplying electric power to the motor (48) loaded therein, the drilling machine body unit (12) being structured such that the battery (16) can be unloaded from the battery loading part by moving the battery (16) upward from the battery loading part, the drilling machine body unit (12) supporting the drilling drive unit (14) vertically movably to bring the drilling tool (44) toward and away from a workpiece; and
a battery (16) configured to be loaded in the battery loading part;
**characterised in that** the drilling machine further comprises:
an electromagnet (18) attached to the drilling machine body unit (12) to securely hold the drilling machine body unit (12) in a position for a drilling operation by the drilling machine (10);
a drive control circuit (68) provided in the drilling machine body unit (12) to drive and control the motor (48) and the electromagnet (18), wherein the drive control circuit (68) is configured to drive and control the motor (48) and the electromagnet (18) by using the battery (16) received in the battery receiving portion as a power source; and
a battery cover (64) attached to the drilling machine body unit (12), the battery cover (64) being movable longitudinally and slidably relative to the drilling machine body unit (12) between a retracted position and an advanced position relative to the battery (16) loaded in the battery loading part,
wherein when the battery cover (64) is in the advanced position, the battery cover (64) covers a gap between the drilling machine body unit (12) and the battery (16) from above and is located in a travel path of the battery (16) along which the battery (16) moves when the battery (16) loaded in the battery loading part is unloaded therefrom, so that the battery (64) cannot be unloaded from the battery loading part.

2. The drilling machine (10) of claim 1, further comprising:
a limit switch disposed in the drilling machine body unit (12) to detect that the battery cover (64) has moved between the retracted position and the advanced position,
the battery cover (64) being configured to turn on/off the limit switch (66) when the battery cover (64) moves between the retracted position and the advanced position.

## Patentansprüche

1. Bohrmaschine (10), die Folgendes aufweist:
eine Bohrantriebseinheit (14) mit einem Motor (48) zum Antreiben eines Bohrwerkzeugs (44) zur Drehung;
eine Bohrmaschinenkörpereinheit (12) mit einem Batterieladeteil, der zum Laden bzw. Einsetzen eines Akkus bzw. einer Batterie (16) dorthinein konfiguriert ist, und zwar zum Liefern von elektrischer Leistung an den Motor (48) , wobei die Bohrmaschinenkörpereinheit (12) so strukturiert ist, dass die Batterie aus dem Batterieladeteil entnommen bzw. entladen werden kann, indem die Batterie (16) aus dem Batterieladeteil nach oben bewegt wird, wobei die Bohrmaschinenkörpereinheit (12) die Bohrantriebseinheit (14) in vertikal bewegbarer Weise trägt, um das Bohrwerkzeug (44) zu einem Werkstück hin und weg von diesem zu bringen; und
eine Batterie (16), die zum Einsetzen in den Batterieladeteil konfiguriert ist;
**dadurch gekennzeichnet, dass** die Bohrmaschine weiter Folgendes aufweist:
einen Elektromagnet (18), der an der Bohrmaschinenkörpereinheit (12) angebracht ist, um die Bohrmaschinenkörpereinheit (12) sicher in einer Position für einen Bohrbetrieb durch die Bohrmaschine (10) zu halten;
eine Antriebssteuerschaltung (68), die in der Bohrmaschinenkörpereinheit (12) vorgesehen ist, um den Motor (48) und den Elektromagnet (18) anzutreiben und zu steuern, wobei die Antriebssteuerschaltung (68) konfiguriert ist, um den Motor (48) und den Elektromagnet (18) unter Verwendung der Batterie (16) als eine Leistungsquelle anzutreiben und zu steuern, welche in dem Batterieaufnahmeteil aufgenommen ist; und
eine Batterieabdeckung (64), die an der Bohrmaschinenkörpereinheit (12) befestigt ist, wobei die Batterieabdeckung (64) in Längsrichtung bewegbar ist und relativ zu der Bohrmaschinenkörpereinheit (12) verschiebbar ist, und zwar zwischen einer zurückgezogenen Position und einer vorgeschobenen Position bezüglich der Batterie (16), die in den Batterieladeteil geladen bzw. eingesetzt ist;
wobei, wenn die Batterieabdeckung (64) in der vorgeschobenen Position ist, die Batterieabdeckung (64) einen Spalt zwischen der Bohrmaschinenkörpereinheit (12) und der Batterie (16) von oben abdeckt und in einem Laufpfad der Batterie (16) angeordnet ist, entlang dem sich die Batterie (16) bewegt, wenn die Batterie (16), die in den Batterieladeteil geladen bzw. eingesetzt ist, von dort entladen bzw. entnommen wird, so dass die Batterie 64 nicht aus dem Batterieladeteil entladen bzw. entnommen werden kann.

2. Bohrmaschine (10) nach Anspruch 1, die weiter Folgendes aufweist:
einen Grenzschalter, der in der Bohrmaschinenkörpereinheit (12) angeordnet ist, um zu detektieren, dass die Batterieabdeckung (64) sich zwischen der zurückgezogenen Position und der vorgeschriebenen Position bewegt hat, wobei die Batterieabdeckung (64) konfiguriert ist, um den Grenzschalter (66) anzuschalten/auszuschalten, wenn die Batterieabdeckung (64) sich zwischen der zurückgezogenen Position und der vorgeschobenen Position bewegt.

## Revendications

1. Perceuse (10) comprenant :
une unité d'entraînement de perçage (14) munie d'un moteur (48) pour entraîner en rotation un outil de perçage (44) ;
une unité de corps de perceuse (12) munie d'une partie d'accueil d'une batterie configurée pour accueillir une batterie (16) destinée à alimenter en énergie électrique le moteur (48), l'unité de corps de perceuse (12) ayant une structure telle que la batterie (16) puisse être retirée hors de la partie d'accueil de la batterie en déplaçant la batterie (16) vers le haut hors de la partie d'accueil de la batterie, l'unité de corps de perceuse (12) supportant l'unité d'entraînement de perçage (14) de façon mobile verticalement pour rapprocher et éloigner l'outil de perçage (44) d'une pièce à usiner ;
une batterie (16) configurée pour être insérée dans la partie d'accueil d'une batterie ;
**caractérisée en ce que** la perceuse comprend en outre :
un électroaimant (18) fixé à l'unité de corps de perceuse (12) pour maintenir en toute sécurité l'unité de corps de perceuse (12) dans une position destinée à une opération de perçage par la perceuse (10) ;
un circuit de commande d'entraînement (68) prévu dans l'unité de corps de perceuse (12) pour entraîner et commander le moteur (48) et l'électroaimant (18), dans laquelle le circuit de commande d'entraînement (68) est configuré pour entraîner et commander le moteur (48) et l'électroaimant (18) en utilisant la batterie (16) reçue dans la partie de réception de batterie en tant que source d'alimentation ; et
un couvercle de batterie (64) fixé à l'unité de corps de perceuse (12), le couvercle de batterie (64) étant mobile longitudinalement et à glissement par rapport à l'unité de corps de perceuse (12) entre une position rétractée et une position avancée par rapport à la batterie (16) insérée dans la partie d'accueil d'une batterie,
dans laquelle, lorsque le couvercle de batterie (64) est en position avancée, le couvercle de batterie (64) recouvre un espace entre l'unité de corps de perceuse (12) et la batterie (16) depuis le haut et est situé dans un trajet de déplacement de la batterie (16) le long duquel la batterie (16) se déplace lorsque la batterie (16) insérée dans la partie d'accueil d'une batterie est retirée hors de celle-ci, de sorte que la batterie puisse être retirée hors de la partie d'accueil d'une batterie.

2. Perceuse (10) selon la revendication 1, comprenant en outre :
un interrupteur de fin de course disposé dans l'unité de corps de perceuse (12) pour détecter que le couvercle de batterie (64) s'est déplacé entre la position rétractée et la position avancée,
le couvercle de la batterie (64) étant configuré pour activer/désactiver l'interrupteur de fin de course (66) lorsque le couvercle de la batterie (64) se déplace entre la position rétractée et la position avancée.
